# EUROPEAN PATENT SPECIFICATION

(11) **EP 0 717 904 B1**
(45) Date of publication and mention of the grant of the patent: **01.09.1999**
(21) Application number: 95921091.5
(22) Date of filing: 22.06.1995
(51) Int. Cl.: H04N 7/00, H04N 5/44

(54) **LETTERBOX TELEVISION SIGNAL DECODING**
LETTERBOX-FERNSEHSIGNAL-DEKODIERUNG
DECODAGE DE SIGNAUX DE TELEVISION EN FORMAT BOITE AUX LETTRES

(30) Priority: 07.07.1994 EP 94201959
(43) Date of publication of application: 26.06.1996
(73) Proprietor: Koninklijke Philips Electronics N.V., 5621 BA Eindhoven (NL)
(72) Inventor: POOT, Teunis, NL-5621 BA Eindhoven (NL)
(74) Representative: Steenbeek, Leonardus Johannes
(86) International application number: IB9500506
(87) International publication number: WO9602107

(56) References cited:
- WO-A-92/06565
- PATENT ABSTRACTS OF JAPAN, Vol. 18, No. 515, E-1611; & JP,A,6 178 272 (HITACHI LTD), 24 June 1994 (24.06.94).

## Description

The invention relates to a method and apparatus for decoding a letterbox television signal, *i.e.* a standard aspect ratio television signal comprising a wide aspect ratio center part and black bars at the upper and lower sides of the center part, whereby the center part and the upper and lower black bars together constitute the standard aspect ratio television signal, in order to furnish a wide aspect ratio output picture. More specifically, the invention relates to an efficient memory architecture for use in the letterbox television decoding.

WO-A-92/06565 discloses a television transmission system in which 16:9 television receivers for letterbox signals with additional information are also able to reproduce standard 4:3 television signals with or without letterbox format. These receivers usually require several frame stores partly owing to time-delayed processing of image signals and additional information. A suitable time arrangement of the additional information at the transmitter can save on storage capacity in the receiver and, with the aid of the remaining stores in the 16:9 receiver it is possible to detect the type of television signals and decode them suitably.

The article "Neue Fernseher noch dieses Jahr", Funkschau 13/1994, pp. 54-57, discloses a letterbox television signal decoder of the type described above. In the article, a diagram shows a first serial video processor SVP1 for furnishing center part luminance signals Y and chrominance signals U, V, as well as a second serial video processor SVP2 for combining the center part luminance signal Y and a vertical resolution helper luminance signal Yh from a helper demodulator into an output luminance signal of a wide aspect ratio output picture. The second serial video processor SVP2 also upconverts the center part chrominance signals U, V into an output chrominance signal of the wide aspect ratio output picture. The article gives no details about any memories required for storing the center part luminance signals Y and the vertical resolution helper luminance signals Yh to furnish input luminance signals for the combining operation in the second serial video processor SVP2.

It is, *inter alia,* an object of the invention to provide a very efficient use of required memory. To this end, a first aspect of the invention provides a method as defined in claim 1. A second aspect of the invention provides a apparatus as defined in claim 2.

According to the invention, in a method of decoding a letterbox television signal which comprises a wide aspect ratio center part and upper and lower black bars located at the respective upper and lower sides of the wide aspect ratio center part, the wide aspect ratio center part and the black bars together constituting a standard aspect ratio television signal, the black bars conveying additional signals for increasing a vertical resolution of the center part, additional signals from the upper black bar and a lower half of the center part are stored in a first memory, and an upper half of the center part and additional signals from the lower black bar are stored in a second memory. Subsequently, the upper black bar additional signals and the upper half of the center part are combined to form an upper half of a wide aspect ratio output picture, and the lower black bar additional signals and the lower half of the center part are combined to form a lower half of the wide aspect ratio output picture. This mixed and crossed storage of the upper black bar additional signals and lower half of the center part on the one hand, and of the upper half of the center part and the lower black bar additional signals on the other hand, provides the advantage that both memories can be read out sequentially and do not need to be addressable. Consequently, a cost advantage is obtained. The invention can advantageously be used for decoding PALplus television signals, whereby the black bar signals and the center part signals are combined as prescribed by the PALplus standard.

These and other aspects of the invention will be apparent from and elucidated with reference to the embodiments described hereinafter.

In the drawing:

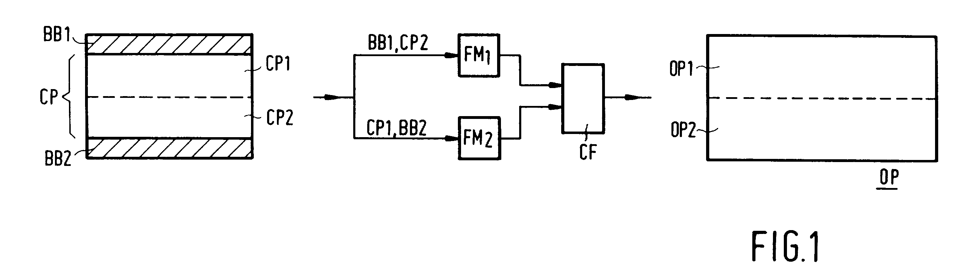

Fig. 1 illustrates an embodiment of a letterbox television signal decoder in accordance with the present invention.

The left-hand side of Fig. 1 illustrates a letterbox television signal with an upper black bar BB1, a center part CP, and a lower black bar BB2. The center part luminance and chrominance signals of this letterbox signal may be provided by the first serial video processor SVP1 shown in the article "Neue Fernseher noch dieses Jahr", Funkschau 13/1994, pp. 54-57, incorporated herein by reference. The first serial video processor SVP1 has thus carried out a motion-adaptive "colorplus" decoding to furnish luminance and chrominance signals with reduced cross-artifacts. The black bars BB1, BB2 convey additional vertical resolution helper luminance signals for increasing the vertical resolution of the center part luminance signals. A combining filter CF combines the center part luminance signal and the vertical resolution helper luminance signals to form an output luminance signal of an output picture OP. The video lines of the center part luminance signal and the vertical resolution helper luminance signals have to be supplied to the combining filter CF in a suitable manner such that it can easily combine corresponding center part and vertical resolution helper luminance information components.

In accordance with the present invention, the vertical resolution helper luminance signals in the upper black bar BB1 are stored in a first field memory FM1, center part luminance signals of an upper half CP1 of the center part CP are stored in a second field memory FM2, center part luminance signals of a lower half CP2 of the center part CP are stored in the first field memory FM1, and the vertical resolution helper luminance signals in the lower black bar BB2 are stored in the second field memory FM2. By simply serially reading the stored information components from the field memories FM1, FM2, the combining filter CF can now easily combine mutually corresponding vertical resolution helper luminance signals from the upper black bar BB1 and center part luminance signals from the upper half CP1 of the center part CP in order to form an upper half OP1 of the output picture OP. Further, by simply serially reading the stored information components from the field memories FM1, FM2, the combining filter CF can now easily combine mutually corresponding vertical resolution helper luminance signals from the lower black bar BB2 and center part luminance signals from the lower half CP2 of the center part CP in order to form a lower half OP2 of the output picture OP. This is illustrated in the middle and right-hand parts of Fig. 1. The field memories FM1, FM2 have thus each a capacity which is sufficient for storing one of the black bars BB1 or BB2, and one half CP1 or CP2 of the center part CP.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The invention can be implemented by means of hardware comprising several distinct elements, and by means of a suitably programmed data processor. While the chrominance signals of the center part CP are not combined with any corresponding helper information components from the black bars BB1, BB2, they have to be upconverted in order to increase the frame line number from about 430 (center part only) to about 576 (full height of the picture), and they have to be stored to provide a delay corresponding to that in the luminance signal processing path. As this bears no relation with the aspect of the letterbox television signal decoder dealt with by the present invention, no further details on the chrominance signal processing are given in this application.

## Claims

1. A method of decoding a letterbox television signal comprising a wide aspect ratio center part (CP) and upper (BB1) and lower (BB2) black bars located at the respective upper and lower sides of the wide aspect ratio center part (CP), the wide aspect ratio center part (CP) and the black bars (BB1, BB2) together constituting a standard aspect ratio television signal, the black bars (BB1, BB2) conveying additional signals for increasing a vertical resolution of said wide aspect ratio center part, the method comprising the step of:
receiving the letterbox television signal to provide a sequence of television lines sequentially corresponding to said upper black bar (BB1), said wide aspect ratio center part (CP), and said lower black bar (BB2);
the method being characterized by the steps of:
storing additional signals from said upper black bar (BB1), and a lower half (CP2) of said wide aspect ratio center part (CP) in a first memory (FM1);
storing an upper half (CP1) of said wide aspect ratio center part (CP), and additional signals from said lower black bar (BB2) in a second memory (FM2);
combining said upper black bar additional signals (BB1) and said upper half (CP1) of said wide aspect ratio center part (CP) to form an upper half (OP1) of a wide aspect ratio output picture (OP); and
combining said lower black bar additional signals (BB2) and said lower half (CP2) of said wide aspect ratio center part (CP) to form a lower half (OP2) of said wide aspect ratio output picture (OP).

2. An apparatus for decoding a letterbox television signal comprising a wide aspect ratio center part (CP) and upper (BB1) and lower (BB2) black bars located at the respective upper and lower sides of the wide aspect ratio center part (CP), the wide aspect ratio center part (CP) and the black bars (BB1, BB2) together constituting a standard aspect ratio television signal, the black bars (BB1, BB2) conveying additional signals for increasing a vertical resolution of said wide aspect ratio center part, the apparatus comprising:
means for receiving the letterbox television signal to provide a sequence of television lines sequentially corresponding to said upper black bar (BB1), said wide aspect ratio center part (CP), and said lower black bar (BB2);
characterized in that the apparatus further comprises:
first memory means (FM1) for storing additional signals from said upper black bar (BB1), and a lower half (CP2) of said wide aspect ratio center part (CP);
second memory means (FM2) for storing an upper half (CP1) of said wide aspect ratio center part (CP), and additional signals from said lower black bar (BB2);
means (CF) coupled to said first (FM1) and second (FM2) memory means for combining said upper black bar additional signals (BB1) and said upper half (CP1) of said wide aspect ratio center part (CP) to form an upper half (OP1) of a wide aspect ratio output picture (OP), and for combining said lower black bar additional signals (BB2) and said lower half (CP2) of said wide aspect ratio center part (CP) to form a lower half (OP2) of said wide aspect ratio output picture (OP).

## Patentansprüche

1. Verfahren zum Decodieren eines Letterbox-Fernsehsignals mit einem Zentralteil (CP) mit einem Breitbildformat und mit einem oberen (BB1) und einem unteren (BB2) Schwarzbalken an der oberen bzw. unteren Seite des Zentralteils (CP) mit dem Breitbildformat, wobei der Zentralteil (CP) mit dem Breitbildformat und die Schwarzbalken (BB1, BB2) zusammen ein Fernsehsignal mit einem Standardbildformat bilden, wobei die Schwarzbalken (BB1, BB2) Zusatzsignale tragen zur Steigerung einer Vertikalauflösung des genannten Zentralteils mit dem Breitbildformat, wobei dieses Verfahren die nachfolgenden Verfahrensschritte umfasst:
- das Empfangen des Letterbox-Fernsehsignals zum Schaffen einer Folge von Fernsehzeilen, die sequentiell dem genannten oberen Schwarzbalken (BB1), dem genannten Zentralteil (CP) mit dem Breitbildformat und dem genannten unteren Schwarzbalken (BB2) entsprechen;
wobei dieses Verfahren gekennzeichnet ist durch die nachfolgenden Verfahrensschritte:
- das Speichern von Zusatzsignalen aus dem genannten oberen Schwarzbalken (BB1), und einer unteren Hälfte (CP2) des genannten Zentralteils (CP) mit dem Breitbildformat in einem ersten Speicher (FM1);
- das Speichern einer oberen Hälfte (CP1) des genannten Zentralteils mit dem Breitbildformat, und das Speichern von Zusatzsignalen aus dem genannten unteren Schwarzbalken (BB2) in einem zweiten Speicher (FM2);
- das Kombinieren der genannten Zusatzsignale aus dem genannten oberen Schwarzbalken (BB1) und der genannten Signale der oberen Hälfte (CP1) des genannten Zentralteils (CP) mit dem Breitbildformat zum Bilden einer oberen Hälfte (OP1) eines Ausgangsbildes (OP) mit dem Breitbildformat; und
- das Kombinieren der genannten Zusatzsignale des genannten unteren Schwarzbalkens (BB2) und der genannten Signale der unteren Hälfte (CP2) des genannten Zentralteils (CP) mit dem Breitbildformat zum Bilden einer unteren Hälfte (OP2) des genannten Ausgangsbildes (OP) mit dem Breitbildformat.

2. Anordnung zum Decodieren eines Letterbox-Fernsehsignals mit einem Zentralteil (CP) mit einem Breitbildformat und mit einem oberen (BB1) und einem unteren (BB2) Schwarzbalken an der oberen bzw. unteren Seite des Zentralteils (CP) mit dem Breitbildformat, wobei der Zentralteil (CP) mit dem Breitbildformat und die Schwarzbalken (BB1, BB2) zusammen ein Fernsehsignal mit einem Standardbildformat bilden, wobei die Schwarzbalken (BB1, BB2) Zusatzsignale tragen zur Steigerung einer Vertikalauflösung des genannten Zentralteils mit dem Breitbildformat, wobei diese Anordnung die nachfolgenden Elemente umfasst:
- Mittel zum Empfangen des Letterbox-Fernsehsignals zum Schaffen einer Folge von Fernsehzeilen, die sequentiell dem genannten oberen Schwarzbalken (BB1), dem genannten Zentralteil (CP) mit dem Breitbildformat und dem genannten unteren Schwarzbalken (BB2) entsprechen;
dadurch gekennzeichnet, dass die Anordnung die nachfolgenden Elemente aufweist:
- erste Speichermittel (FM1) zum Speichern von Zusatzsignalen aus dem genannten oberen Schwarzbalken (BB1), und einer unteren Hälfte (CP2) des genannten Zentralteils (CP) mit dem Breitbildformat;
- zweite Speichermittel (FM2) zum Speichern einer oberen Hälfte (CP1) des genannten Zentralteils mit dem Breitbildformat, und zum Speichern von Zusatzsignalen aus dem genannten unteren Schwarzbalken (BB2);
- Mittel (CF), die mit den ersten (FM1) und den zweiten (FM2) Speichermitteln gekoppelt sind zum Kombinieren der genannten Zusatzsignale aus dem genannten oberen Schwarzbalken (BB1) und der genannten Signale der oberen Hälfte (CP1) des genannten Zentralteils (CP) mit dem Breitbildformat zum Bilden einer oberen Hälfte (OP1) eines Ausgangsbildes (OP) mit dem Breitbildformat; und zum Kombinieren der genannten Zusatzsignale des genannten unteren Schwarzbalkens (BB2) und der genannten Signale der unteren Hälfte (CP2) des genannten Zentralteils (CP) mit dem Breitbildformat zum Bilden einer unteren Hälfte (OP2) des genannten Ausgangsbildes (OP) mit dem Breitbildformat.

## Revendications

1. Procédé de décodage d'un signal de télévision au format boîte aux lettres comprenant une partie centrale au format d'image large (CP) et des bandes noires supérieure (BB1) et inférieure (BB2) situées au niveau des côtés supérieur et inférieur respectifs de la partie centrale au format d'image large (CP), la partie centrale au format d'image large (CP) et les bandes noires (BB1, BB2) constituant ensemble un signal de télévision au format d'image standard, les bandes noires (BB1, BB2) acheminant des signaux supplémentaires pour accroître une définition verticale de ladite partie centrale au format d'image large, le procédé comprenant les étapes consistant à :
recevoir le signal de télévision au format boîte aux lettres pour fournir de manière séquentielle une séquence de lignes de télévision correspondant à ladite bande noire supérieure (BB1), à ladite partie centrale au format d'image large (CP) et à ladite bande noire inférieure (BB2);
le procédé étant caractérisé par les étapes consistant à :
stocker des signaux supplémentaires provenant de ladite bande noire supérieure (BB1), et une moitié inférieure (CP2) de ladite partie centrale au format d'image large (CP) dans une première mémoire (FM1);
stocker une moitié supérieure (CP1) de ladite partie centrale au format d'image large (CP), et des signaux supplémentaires provenant de ladite bande noire inférieure (BB2) dans une deuxième mémoire (FM2);
combiner lesdits signaux supplémentaires de bande noire supérieure (BB1) et ladite moitié supérieure (CP1) de ladite partie centrale au format d'image large (CP) pour former une moitié supérieure (OP1) d'une image de sortie au format d'image large (OP), et
combiner lesdits signaux supplémentaires de bande noire inférieure (BB2) et ladite moitié inférieure (CP2) de ladite partie centrale au format d'image large (CP) pour former une moitié inférieure (OP2) de ladite image de sortie au format d'image large (OP).

2. Appareil pour décoder un signal de télévision au format boîte aux lettres comprenant une partie centrale au format d'image large (CP) et des bandes noires supérieure (BB1) et inférieure (BB2) situées au niveau des côtés supérieur et inférieur respectifs de la partie centrale au format d'image large (CP), la partie centrale au format d'image large (CP) et les bandes noires (BB1, BB2) constituant ensemble un signal de télévision au format d'image standard, les bandes noires (BB1, BB2) acheminant des signaux supplémentaires pour accroître une définition verticale de ladite partie centrale au format d'image large, l'appareil comprenant :
des moyens pour recevoir le signal de télévision au format boîte aux lettres pour fournir de manière séquentielle une séquences de lignes de télévision correspondant à ladite bande noire supérieure (BB1), à ladite partie centrale au format d'image large (CP) et à ladite bande noire inférieure (BB2);
caractérisé en ce que l'appareil comprend en outre :
des premiers moyens de mémoire (FM1) pour stocker des signaux supplémentaires provenant de ladite bande noire supérieure (BB1), et une moitié inférieure (CP2) de ladite partie centrale au format d'image large (CP);
des deuxièmes moyens de mémoire (FM2) pour stocker une moitié supérieure (CP1) de ladite partie centrale au format d'image large (CP), et des signaux supplémentaires provenant de ladite bande noire inférieure (BB2);
des moyens (CF) couplés auxdits premiers (FM1) et deuxièmes (FM2) moyens de mémoire pour combiner lesdits signaux supplémentaires de bande noire supérieure (BB1) et ladite moitié supérieure (CP1) de ladite partie centrale au format d'image large (CP) pour former une moitié supérieure (OP1) d'une image de sortie au format d'image large (OP), et pour combiner lesdits signaux supplémentaires de bande noire inférieure (BB2) et ladite moitié inférieure (CP2) de ladite partie centrale au format d'image large (CP) pour former une moitié inférieure (OP2) de ladite image de sortie au format d'image large (OP).
